# EUROPÄISCHE PATENTANMELDUNG

(11) **EP 3 734 185 A2**
(43) Veröffentlichungstag der Anmeldung: **04.11.2020**
(21) Anmeldenummer: 20171454.0
(22) Anmeldetag: 27.04.2020
(51) Int. Cl.: F24S 60/10, F24S 60/30, F28D 20/00, F28D 20/02

(54) **SPEICHERANLAGE FÜR SONNENERWÄRMTES MEDIUM**

(30) Priorität: 29.04.2019 DE 102019111016
(71) Anmelder: Berndt, Rüdiger, 78247 Hilzingen (DE)
(72) Erfinder: Berndt, Rüdiger, 78247 Hilzingen (DE)
(74) Vertreter: Patentanwälte und Rechtsanwalt Weiß, Arat & Partner mbB

(57) **Zusammenfassung**

Bei einer Speicheranlage für sonnenerwärmtes Medium bestehend aus einer Hülle (1) mit mindestens einem Zulauf (6) und mindestens einem Ablauf (7) soll die Hülle (1) aus einem Deckelelement (5), einen Bodenelement (8) und mindestens einem ringförmigen Zwischenelement (9.1, 9.2) bestehen, wobei sowohl das Deckelelement (5), das Bodenelement (8) als auch das Zwischenelement (9.1, 9.2) je eine Isolierung (2.1 - 2.4) aufweisen, wobei in Arbeitslage eine dichtende Verbindung zwischen dem Deckelelement (5), dem Bodenelement (8) und dem Zwischenelement (9.1, 9.2) vorhanden ist.

## Beschreibung

### Technisches Gebiet

Die vorliegende Erfindung betrifft eine Speicheranlage für sonnenerwärmtes Medium nach dem Oberbegriff von Anspruch 1 und 2, ein System nach Anspruch 8 sowie ein Verfahren nach Anspruch 9.

### Stand der Technik

Derartige Speicheranlagen sind bereits in vielfältiger Form und Ausführung bekannt und gebräuchlich. Damit wird Sonnenwärme meist in Wassertanks oder anderen geeigneten Speichermedien gespeichert. Je länger der Vorrat halten soll, desto grössere und besser isolierte Speicher werden benötigt. Nachteilig bei den bisherigen Speicheranlagen ist, dass diese bereits in montiertem Zustand geliefert werden und somit eine Auswahl des Bestimmungsortes kaum möglich ist bzw. die Auswahl an möglichen Bestimmungsorten gering ist. Sie sind ausserdem meist aus Stahl und entsprechend schwer. Ein weiterer Nachteil bei grossen zentralen Speichern ist der, dass die Energie auch wieder an die einzelnen Häuser geliefert werden muss, die Bedarf an Wärme haben. Die Verluste sind entsprechend. Einem dezentralen Verbrauch sollte eine dezentrale Speichermöglichkeit zur Verfügung stehen.

### Aufgabe der Erfindung

Die Aufgabe der vorliegenden Erfindung ist es, die Nachteile aus dem Stand der Technik zu überwinden. Insbesondere soll eine Speicheranlage bereitgestellt werden, die es ermöglicht, überall und von nahezu jeder Person aufgestellt, montiert und in Betrieb genommen werden zu können. Besonders Ein- oder kleinere Mehrfamilienhäuser sollten eine Speicheranlage nutzen können. Dieser sollte auch bei entsprechender Grösse nachträglich montiert werden können.

### Lösung der Aufgabe

Zur Lösung der Aufgabe führen die Merkmale nach dem Anspruch 1.

Vorteilhafte Ausgestaltungen sind in den Unteransprüchen beschrieben.

Diese Speicheranlage ist bevorzugt ein Schichtspeicher und umfasst eine Hülle. Die Hülle weist bevorzugt zwei bis drei Zuläufe (Kaltwasser, kalter Wärmeträger) und drei Abläufe (Dusche/Bad, Fussbodenheizung) auf. Ferner ist die Hülle modular aufgebaut, d.h. sie besteht aus verschiedenen Modulen. Im vorliegenden Ausführungsbeispiel handelt es sich bei den Modulen um ein Deckelelement, ein Bodenelement sowie mindestens ein ringförmiges Zwischenelement. Zwischen dem Deckelelement und dem Bodenelement kann ein weiteres Zwischenelement angeordnet werden, um die Höhe eines Raumes bestmöglich ausnutzen zu können. Weitere nicht näher gezeigte Zwischenelemente können vorgesehen sein und zwischen dem Deckelelement und dem Bodenelement montiert werden. Die Anzahl der Zwischenelemente richtet sich nach den Wünschen des Benutzers und der Höhe des Raumes, der zur Verfügung steht.

Sowohl das Deckelelement und das Bodenelement als auch das Zwischenelement bzw. alle weiteren Zwischenelemente weisen je eine eigene Isolierung auf, die derart ausgestaltet ist, dass beim Verbinden von Deckelelement, das Bodenelement und Zwischenelement bzw. allen weiteren Zwischenelementen eine dichtende Verbindung unter den einzelnen Elementen entsteht, die kein Wärmemedium entweichen lässt. Selbstverständlich müssen die Module druckfest und dichtend miteinander verschraubt werden. Falze können nach innen gerichtet sein, um die Isolierung bestmöglich wirken zu lassen, denn dies erlaubt ein Aufeinanderstossen der Isolierung auf der Aussenseite. Ein Aussenfalz wäre allerdings mit dem entsprechenden Nachteil einer relativ kleinen Wärmebrücke denkbar. Es würde das Verschrauben erleichtern.

Die unterschiedlichen Elemente werden in Transportlage voneinander getrennt transportiert und erst an einem Bestimmungsort miteinander verbunden. Wichtig hierbei ist, dass das Deckelelement, das Bodenelement und das Zwischenelement bzw. alle weiteren Zwischenelemente reversibel und dichtend miteinander verbunden und/oder verriegelt werden.

Die Isolierung des Deckelelements, des Bodenelements und des Zwischenelements bzw. aller weiteren Zwischenelemente umfasst bevorzugt eine Aerogel-Isolationsmatte von Spaceloft®. Es handelt sich dabei um eine flexible, nanoporöse Aerogel-Isolationsmatte, die bei geringem Platzbedarf Energieverluste stark verringert und dabei nur wenig Volumen hat. Sie weist eine extrem geringe Wärmeleitfähigkeit, hohe Flexibilität, erhöhte Druckfestigkeit und hydrophober Ausrüstung auf. Silica-Aerogel wird mit festigenden Fasern verbunden und anschliessend wird die Isolationsmatte mit einem Spezialkleber auf eine jeweilige in einen Innenraum zeigende Fläche der inneren Wandung eines jeden Moduls, d.h. des Deckelelements, des Bodenelements und des Zwischenelements bzw. aller weiteren Zwischenelemente aufgebracht. Anstelle der oben genannten Isolationsmatte ist selbstverständlich jedwede andere Isolation möglich, die gewährleistet, dass nur wenig bis keine Wärme aus dem Medium in dem Innenraum der Speicheranlage entweichen kann.

Die Isolation ist für den Wirkungsgrad der Speicheranlage einer der wichtigsten, wenn nicht der wichtigste Faktor. Wenn die Module bereits mit auf dem Markt vorhandenen besten Isoliermaterialien ausgestattet geliefert werden, hat das den Vorteil, dass ein Käufer der Speicheranlage dieses Isoliermaterial nicht von Hand irgendwie aufbringen müsste. Das Isolationsmaterial ist bereits, wie oben schon erwähnt, mit einem Spezialkleber auf die Module aufgebracht worden. Gleichzeitig können die Module selbst aus einem Kunststoff oder einer Kunststofffaser, Glasfaser oder einem geeigneten hitzefesten Kunststoff geformt sein, was ihr Gewicht deutlich leichter macht. Das ist ausserdem billiger und erlaubt es, mehr in die Isolierung zu investieren. Die Speicheranlage wird insgesamt dadurch leichter. Die meisten auf dem Markt befindlichen Stahlkörper weisen den Nachteil auf, das Stahl Wärme deutlich besser leitet als geeignete Kunststoffmaterialien und dies bei vergleichbarer Isolierung.

In Arbeitslage der Speicheranlage, d.h. in zusammengebautem/montiertem Zustand der Speicheranlage ist in dem Innenraum mindestens ein Halteelement vorgesehen. Das Halteelement kann ein Sieb sein, kann jedoch auch jedwede andere Form aufweisen, die geeignet ist, in dem Innenraum der Speicheranlage etwas zu halten. Vorliegend ist daran gedacht, dass in dem Halteelement Speckstein(hohl)kugeln oder ähnliches umfasst sind, die die Wärmekapazität erhöhen können. Wichtig in diesem Zusammenhang ist, dass das Halteelement mediendurchfliessbar ist.

Weiterhin kann das Halteelement in dem Innenraum der Speicheranlage in beliebiger Höhe angebracht werden, wobei die Höhe der Falze der sinnvollste Ort erscheint. Dies kann natürlich ebenfalls nachträglich durchgeführt werden. Ebenfalls können die Speckstein(hohl)kugeln auch noch nachträglich durch eine Öffnung in den Innenraum der Speicheranlage eingebracht werden. Vorteil ist, dass der Speicher später aufgerüstet werden kann, um die Speicherkapazität später erhöhen zu können. Gründe für eine Nachrüstung mögen grösserer Verbrauch von Warmwasser und/oder eine Vergrösserung der Fläche der Solaranlage sein. Der Speicher kann also mit der Vergrösserung der Anlage bei gleichem Volumen mitwachsen.

Die Speckstein(hohl)kugeln können Paraffin oder ein anderes Wärmespeichermedium umfassen/beinhalten/aufweisen, womit zusätzlich der Effekt des Latentwärmespeichers genutzt werden kann. Die Speckstein(hohl)kugeln selbst sind so gestaltet, dass sie bei Normaltemperatur im Wärmeträgermedium nur leicht auf dem Halteelement aufliegen. Sie sind so gestaltet, dass sie bei Wärmezufuhr nach oben steigen, wobei sich gerade die Speicherkapazität im obersten Bereich der Speicheranlage entsprechend erhöht.

Weiterhin ist ausserhalb der Hülle der Speicheranlage ein Wärmetauscher vorgesehen, welcher bevorzugt aus Karbonfasern gefertigt oder zumindest damit beschichtet ist und welcher mit der Speicheranlage verbunden ist. Hierfür wird separat Schutz begehrt. Karbon weist den Vorteil auf, dass es in etwa achtmal leitfähiger ist als Stahl. Der Wärmetauscher sollte ausserhalb der Hülle angeordnet sein. Bei den handelsüblichen Speicheranlagen ist der Wärmetauscher meist im Inneren in Form von Wendeln angelegt, was beim Aufheizen zu Verwirbelungseffekten im Wärmeträgermedium führt. Eine Schichtung des Wärmeträgermediums wird dadurch fast unmöglich gemacht. Das macht die meisten auf dem Markt erhältlichen Speicheranlagen in hohem Masse ineffizient und träge. Der Nutzen beschränkt sich daher meist auf Speicheranlagen, die gerade mal ausreichen, um etwas Duschwasser zu produzieren.

Ein weiterer Vorteil einer insbesondere hydraulischen Trennung des Speicheranlage von einem Hauswasserkreislauf über einen Wärmetauscher ist die Tatsache, dass der Hauswasserkreislauf bzw. eine Fussbodenheizung mit Druck arbeiten. Meist gibt es hier ca. 1-2 bar. Auf Seiten der Speicheranlage wird der Druck aber kaum 1 bar überschreiten, da die Speicheranlage nur eine Höhe bis zur Decke haben wird. Bei Wasser wäre der Druck also sogar deutlich geringer. Vorteil ist hier, dass es weniger Probleme mit der Abdichtung der Speicheranlage gibt. Die Speicheranlage zusammen mit den Leitungen zu den Wärmetauschern ist ein geschlossenes System. Es gibt keinen Anschluss an die Hauswasserleitung, es sei denn beim erstmaligen Befüllen der Speicheranlage über einen einfachen abnehmbaren Schlauch.

Weiterhin wird Schutz begehrt für ein System zum Aufbau einer Speicheranlage für sonnenerwärmtes Medium bestehend aus einer Hülle, wobei ein Deckelelement, ein Bodenelement und mindestens ein Zwischenelement in Transportlage voneinander getrennt transportierbar sind und an einem Bestimmungsort durch Zusammenbau in Arbeitslage versetzt werden, wobei ein Ablauf und ein Zulauf mit einem Rohrnetz einer Solaranlage verbunden werden. Bevorzugt sind drei Abläufe und zwei bis drei Zuläufe vorgesehen. Ein Zulauf verläuft aus der Speicheranlage in Richtung der Solaranlage. Einer der Abläufe dient der Entnahme von Wasser für Dusche und Bad. Ein weiterer Ablauf dient der Fussbodenheizung. Da diese eine deutlich geringere Vorlauftemperatur hat, ist diese Entnahmestelle je nach Volumen des Speichers tiefer anzuordnen. Sofern der gesamte Speicher entsprechend warm ist - denkbar ist eine Beschickung z.B. durch einen Wasserkamin - ist die Vorlauftemperatur der Fussbodenheizung über eine Pumpensteuerung entsprechend regulierbar, denn eine Fussbodenheizung mit 40° Grad Vorlauftemperatur ist nicht mehr akzeptabel. Es dauert dann länger, da die Pumpe entsprechend langsamer läuft, um eine angenehme Vorlauftemperatur nicht zu überschreiten

Ferner wird Schutz begehrt für ein Verfahren zum Aufbau einer Speicheranlage für sonnenerwärmtes Medium, welches durch folgende Schritte gekennzeichnet ist:
- in Transportlage wird ein Deckelelement, ein Bodenelement und mindestens ein Zwischenelement voneinander getrennt zu einem Bestimmungsort transportiert;
- an dem Bestimmungsort wird das Zwischenelement einerseits mit dem Bodenelement und andererseits mit dem Deckelelement isolierend verbunden, wobei in Arbeitslage eine dichtende Verbindung zwischen dem Deckelelement, dem Bodenelement und dem Zwischenelement entsteht;
- mindestens ein Ablauf und mindestens ein Zulauf werden mit einem Rohrnetz einer Solaranlage verbunden.

Bevorzugt werden drei Abläufe vorgesehen, einen Ablauf für das Warmwasser im Bad, welcher im oberen Bereich der Speicheranlage vorgesehen ist und einen Ablauf für die Fussbodenheizung, welcher im mittleren Bereich der Speicheranlage vorgesehen ist, da hier das Wasser nicht ganz so heiss ist, wie im oberen Bereich für das Warmwasser. Ein weiterer Ablauf ist im unteren Bereich der Speicheranlage, d.h. in dem am entferntesten zur Solaranlage liegenden Bereich vorgesehen, um dort kühleres oder kühles Wasser für andere Anwendungen abziehen zu können.

Vorteilhafterweise ist vorliegend eine modulare Speicheranlage geschaffen worden, deren einzelne Elemente bereits vor ihrer Montage isoliert wurden und die von einem Benutzer am Bestimmungsort bevorzugt selbst zusammengebaut werden können und zwar unabhängig von dem Bestimmungsort der Speicheranlage. Durch die modulare Bauweise des Schichtspeichers können die einzelnen Elemente durch jede Tür und über jede Treppe transportiert werden, da sie nur etwa 2 bis 2,5m im Durchmesser und nur etwa 1m in der Höhe aufweisen. Dieselbe Leistung wie herkömmliche Speicher zu liefern bei wesentlich niedrigerem Volumen ist ein Vorteil der vorliegenden Erfindung. Das ist möglich, wenn insbesondere Thermoöl und/oder Speckstein(hohl)kugeln verwendet werden. Eine Nachrüstung ist möglich.

Auf diese Weise ist gleichzeitig eine Wartungsfähigkeit der Anlage geschaffen, wie sie bislang vor allem beispielsweise bei einem normalen einstückigen Stahlpufferspeicher noch nicht vorhanden war. Ein Aufschweissen ist hier nicht vorstellbar. Vorliegend wird nun ein Nachrüsten, ein Öffnen des Behälters aus welchen Gründen auch immer sowie eine Transportfähigkeit sichergestellt. Bei einem Umzug kann dieses Speicheranlage problemlos wieder abgebaut und mitgenommen werden

Durch den modularen Aufbau der Speicheranlage besteht weiterhin die Möglichkeit, die Speicheranlage mit einem bereits existierenden älteren Behälter zu verbinden, indem der alte Behälter in seinem Bodenbereich abgesägt wird und die neue Speicheranlage einfach in diesen verbliebenen Teil des alten Behälters eingestellt wird. Die Verbindung zwischen alt und neu muss höchstens 1-2 bar aushalten, sofern aufgrund eine grossen Höhe nicht entsprechende Drücke auftreten. Selbst bei einem direkten Anschluss der Fussbodenheizung dürfte der Druck in diesem Bereich liegen. Undichtigkeit dürfte nur selten ein Problem sein. Voraussetzung ist natürlich hier die hydraulische Trennung des Speichers vom Hauswassernetz über den Wärmetauscher.

Ausserdem sei an die Möglichkeit gedacht, eine bestehende Anlage aufzusägen und teilweise mit weiteren Modulen aus Kunststoff oder dergleichen zu erweitern, sofern Platz am Bestimmungsort vorhanden ist. Dadurch kann auch die Speicherkapazität erhöht werden. Besonders im oberen Bereich macht es j Sinn, die Speicherfähigkeit mit wenig Aufwand zu erhöhen da sich ja dort das Wärmeträgermedium mit der höchsten Temperatur befindet und dort auch die grössten Wärmeverluste vorkommen können.

Was die Speicherkapazität angeht, so kann ein Latentwärmespeicher verwendet werden und als Wärmespeichermedium kann Wasser verwendet werden. Selbstverständlich sind auch andere Medien wie beispielsweise Paraffin, ein Thermoöl, wie beispielsweise Dibenzyltoluol, oder auch Metalle oder dergleichen denkbar. Die Speicheranlage kann innen auch ein anderes Material aufweisen mit anderen Wärmekapazitäten. Hier sind der Erfindung keine Grenzen gesetzt.

Beim Einsatz von Thermoöl wäre der Nebeneffekt gegeben, das schwerere Hohlkugeln aus Speckstein eingesetzt werden können, da ihr spezifisches Gewicht dann höher sein könnte. Der Schwebeeffekt käme dann genauso zum Tragen, wenn die Speckstein(hohl)kugeln entsprechend gebaut sind. Thermoöl kann auch zu einem späteren Zeitpunkt eingesetzt werden, z.B. weil der Kunde zum Zeitpunkt des Kaufs diese Investition noch scheut, da Thermoöl natürlich teurer als Wasser ist und/oder er erst später den Einbau einer Fussbodenheizung in Erwägung zieht.

Weiterhin soll daran gedacht sein, das Wärmespeichermedium Wasser nachträglich durch eine andere Flüssigkeit mit höherer Wärmekapazität austauschbar zu machen.

Als frei programmierbare Universalregelung der Speicheranlage kommt beispielsweise eine UVR 1611 in Frage. Durch eine entsprechende Programmierung kann über die Geschwindigkeit der Pumpen dann der Energiefluss von und zu dem Wärmetauscher präzise gesteuert werden.

Grundsätzlich sollte die Temperatur in der Speicheranlage nicht mehr als 80°C aufweisen, da sich unter Umständen je nach Wärmespeichermedium dieses anfängt, sich zu zersetzen. Vor allem im Sommer ist die Gefahr der Überhitzung gegeben. Besser ist es hier, das Volumen der Speicheranlage zu erhöhen oder mit mehreren Speichern in Reihe zu arbeiten. Je höher die Temperatur ist, umso höher sind auch die Wärmeverluste und umso wichtiger ist die Isolierung.

### Figurenbeschreibung

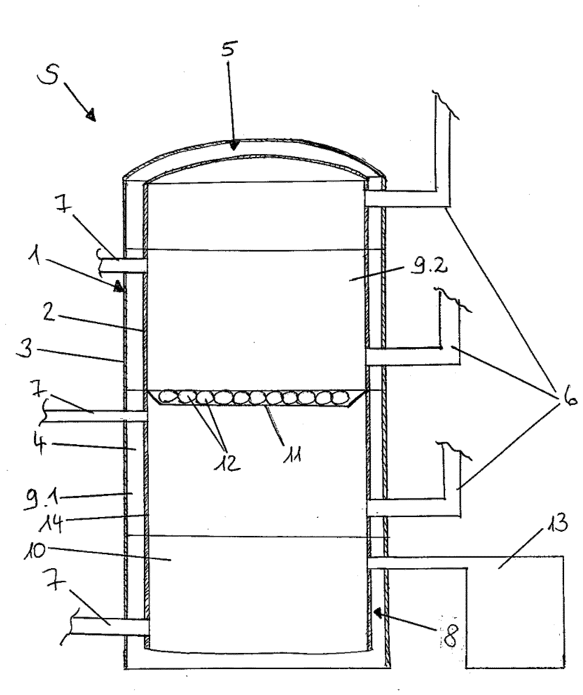

Weitere Vorteile, Merkmale und Einzelheiten der Erfindung ergeben sich aus der nachfolgenden Beschreibung bevorzugter Ausführungsbeispiele sowie anhand der Zeichnungen; diese zeigt in ihrer einzigen Figur einen Längsschnitt durch eine Speicheranlage für sonnenerwärmtes Medium gemäss der vorliegenden Erfindung.

### Ausführungsbeispiel

Gemäss dieser Figur ist eine Speicheranlage S für sonnenerwärmtes Medium gezeigt. Diese Speicheranlage S ist bevorzugt ein Schichtspeicher und umfasst eine Hülle 1.

Die Hülle 1 weist bevorzugt zwei bis drei Zuläufe 6 (Kaltwasser/kalter Wärmeträger) und bevorzugt drei Abläufe 7 (Entnahme zum Wärmetauscher, Fussbodenheizung) auf. Ferner ist die Hülle 1 modular aufgebaut, d.h. sie besteht aus verschiedenen Modulen. Im vorliegenden Ausführungsbeispiel handelt es sich bei den Modulen um ein Deckelelement 5, ein Bodenelement 8 sowie mindestens ein ringförmiges Zwischenelement 9.1. Zwischen dem Deckelelement 5 und dem Bodenelement 8 kann ein weiteres Zwischenelement 9.2 angeordnet werden. Weitere nicht näher gezeigte Zwischenelemente können vorgesehen sein und zwischen dem Deckelelement 5 und dem Bodenelement 8 montiert werden. Die Anzahl der Zwischenelemente richtet sich nach den Wünschen des Benutzers bzw. nach einer Höhe des Raumes.

Sowohl das Deckelelement 5 und das Bodenelement 8 als auch das Zwischenelement 9.1 bzw. 9.2 bzw. alle weiteren Zwischenelemente wiesen je eine eigene Isolierung 2.1 bis 2.4 auf, welche auf eine Aussenfläche 3 der einzelnen Module, d.h. des Deckelelementes 5, des Bodenelementes 8 und des Zwischenelements 9.1 bzw. 9.2 bzw. allen weiteren Zwischenelementen aufgebracht ist. Die Isolierung 2.1 bis 2.4 ist derart ausgestaltet ist, dass beim Verbinden von Deckelelement 5, das Bodenelement 8 und Zwischenelement 9.1 bzw. 9.2 bzw. allen weiteren Zwischenelementen eine dichtende Verbindung unter den einzelnen Elementen entsteht, die kein Wärmemedium entweichen lässt.

Die unterschiedlichen Elemente werden in Transportlage voneinander getrennt transportiert und erst an einem Bestimmungsort miteinander verbunden. Wichtig hierbei ist, dass das Deckelelement 5, das Bodenelement 8 und das Zwischenelement 9.1 bzw. 9.2 bzw. alle weiteren Zwischenelemente reversibel und dichtend miteinander verbunden und/oder verriegelt werden.

Die Isolierung des Deckelelements 5, des Bodenelements 8 und des Zwischenelements 9.1 bzw. 9.2 bzw. aller weiteren Zwischenelemente umfasst bevorzugt eine Aerogel-Isolationsmatte, die mit einem Spezialkleber auf die jeweilige Aussenfläche 3 eines jeden Moduls, d.h. des Deckelelements 5, des Bodenelements 8 und des Zwischenelements 9.1 bzw. 9.2 bzw. aller weiteren Zwischenelemente aufgebracht wird.

In Arbeitslage der Speicheranlage S, d.h. in zusammengebautem/montiertem Zustand der Speicheranlage S ist in einem Innenraum 10 mindestens ein Halteelement 11 vorgesehen. Das Halteelement 11 kann ein Sieb sein, kann jedoch auch jedwede andere Form aufweisen, die geeignet ist, in dem Innenraum 10 der Speicheranlage S etwas zu halten. Vorliegend ist daran gedacht, dass in dem Halteelement 11 Speckstein(hohl)kugeln 12 umfasst sind. Wichtig in diesem Zusammenhang ist, dass das Halteelement 11 mediendurchfliessbar ist.

Die Speckstein(hohl)kugeln können auch noch nachträglich durch eine Öffnung 14 in den Innenraum 10 der Speicheranlage S eingebracht werden.

Weiterhin ist ausserhalb der Hülle 1 der Speicheranlage S ein Wärmetauscher 13 vorgesehen, welcher bevorzugt aus Karbonfasern gefertigt oder zumindest damit beschichtet ist und welcher mit der Speicheranlage S verbunden ist.

Weiterhin wird Schutz begehrt für ein System zum Aufbau einer Speicheranlage S für sonnenerwärmtes Medium bestehend aus einer Hülle1, wobei ein Deckelelement 5, ein Bodenelement 8 und mindestens ein Zwischenelement 9.1 in Transportlage voneinander getrennt transportierbar sind und an einem Bestimmungsort durch Zusammenbau in Arbeitslage versetzt werden, wobei ein Ablauf 7 und ein Zulauf 6 mit einem Rohrnetz einer Solaranlage verbunden werden. Bevorzugt sind drei Abläufe 7 und zwei bis dreii Zuläufe 6 vorgesehen.

Ferner wird Schutz begehrt für ein Verfahren zum Aufbau einer Speicheranlage S für sonnenerwärmtes Medium, welches durch folgende Schritte gekennzeichnet ist:
- in Transportlage wird ein Deckelelement 5, ein Bodenelement 8 und mindestens ein Zwischenelement 9.1 voneinander getrennt zu einem Bestimmungsort transportiert;
- an dem Bestimmungsort wird das Zwischenelement 9.1 und 9.2 einerseits mit dem Bodenelement 8 und andererseits mit dem Deckelelement 5 verbunden, wobei in Arbeitslage eine dichtende Verbindung zwischen dem Deckelelement 5, dem Bodenelement 8 und dem Zwischenelement 9.1, 9.2 entsteht;
- mindestens ein Ablauf 7 und mindestens ein Zulauf 6 werden über einen Wärmetauscher (13) mit einem Rohrnetz bzw. einer Solaranlage verbunden.

Durch die modulare Bauweise des Schichtspeichers S können die einzelnen Elemente überall hin und nahezu durch jede Tür transportiert werden, da sie nur etwa 2 bis 2,5m im Durchmesser und nur etwa 1m in der Höhe aufweisen. Durch die modulare Bauweise kann die Speicheranlage S an nahezu jedem Bestimmungsort aufgestellt und zusammengebaut werden.

Obwohl nur ein bevorzugtes Ausführungsbeispiel der Erfindung beschrieben und dargestellt wurde, ist es offensichtlich, dass der Fachmann zahlreiche Modifikationen hinzufügen kann, ohne Wesen und Umfang der Erfindung zu verlassen.

### Bezugszeichenliste

| | | | | | |
|---|---|---|---|---|---|
| 1 | Hülle | 34 | | | |
| 2 | Isolierung | 35 | | | |
| 3 | Aussenfläche | 36 | | | |
| 4 | | 37 | | | |
| 5 | Deckelelement | 38 | | | |
| 6 | Zulauf | 39 | | | |
| 7 | Ablauf | 40 | | | |
| 8 | Bodenelement | 41 | | | |
| 9 | Zwischenelement | 42 | | | |
| 10 | Innenraum | 43 | | | |
| 11 | Halteelement | 44 | | | |
| 12 | Speckstein(hohl)kugel | 45 | | | |
| 13 | Wärmetauscher | 46 | | | |
| 14 | Öffnung | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Speicheranlage für sonnenerwärmtes Medium bestehend aus einer Hülle (1) mit mindestens einem Zulauf (6) und mindestens einem Ablauf (7),
**dadurch gekennzeichnet,**
**dass** die Hülle (1) aus einem Deckelelement (5), einen Bodenelement (8) und mindestens einem ringförmigen Zwischenelement (9.1, 9.2) besteht, wobei sowohl das Deckelelement (5), das Bodenelement (8) als auch das Zwischenelement (9.1, 9.2) je eine Isolierung (2.1 - 2.4) aufweisen, wobei in Arbeitslage eine dichtende Verbindung zwischen dem Deckelelement (5), dem Bodenelement (8) und dem Zwischenelement (9.1, 9.2) vorhanden ist.

2. Speicheranlage für sonnenerwärmtes Medium bestehend aus einer Hülle (1) mit mindestens einem Zulauf (6) und mindestens einem Ablauf (7), **dadurch gekennzeichnet, dass** ein Wärmetauscher (13) aus Karbonfasern vorhanden und mit der Speicheranlage (S) verbunden ist.

3. Speicheranlage nach Anspruch 1, **dadurch gekennzeichnet, dass** zwischen dem Deckelement (5) und dem Bodenelement (8) ein weiteres Zwischenelement (9.1, 9.2) anordnenbar ist.

4. Speicheranlage nach einem der vorigen Ansprüche, **dadurch gekennzeichnet, dass** das Deckelelement (5), das Bodenelement (8) und das Zwischenelement (9.1, 9.2) reversibel und dichtend miteinander verbindbar und/oder verriegelbar sind.

5. Speicheranlage nach einem der vorigen Ansprüche, **dadurch gekennzeichnet, dass** in Arbeitslage in einem Innenraum (10) mindestens ein Halteelement (11) vorhanden ist, wobei das Halteelement (10) Speckstein(hohl)kugeln (12) umfasst, wobei das Halteelement (11) mediendurchfliessbar ist.

6. Speicheranlage nach einem der vorigen Ansprüche, **dadurch gekennzeichnet, dass** in einem Innenraum 10 der Hülle 1 Wasser, Paraffin, Thermoöl oder dergleichen Wärmespeichermedium vorgesehen ist.

7. Speicheranlage nach einem der vorigen Ansprüche, **dadurch gekennzeichnet, dass** das Deckelelement (5), das Bodenelement (8) und das Zwischenelement (9.1, 9.2) in Transportlage voneinander getrennt transportierbar sind.

8. System zum Aufbau einer Speicheranlage (S) für sonnenerwärmtes Medium bestehend aus einer Hülle (1) mit mindestens einem Zulauf (6) und mindestens einem Ablauf (7), **dadurch gekennzeichnet, dass** ein Deckelelement (5), ein Bodenelement (8) und mindestens ein Zwischenelement (9.1, 9.2) in Transportlage voneinander getrennt transportierbar sind und an einem Bestimmungsort durch Zusammenbau in Arbeitslage versetzt werden, wobei der Ablauf (7) und der Zulauf (6) mit einem Rohrnetz einer Solaranlage verbunden werden.

9. Verfahren zum Aufbau einer Speicheranlage (S) für sonnenerwärmtes Medium **gekennzeichnet durch** folgende Schritte:
- in Transportlage wird ein Deckelelement (5), ein Bodenelement (8) und mindestens ein Zwischenelement (9.1, 9.2), welche jeweils eine Isolierung aufweisen, voneinander getrennt zu einem Bestimmungsort transportiert;
- an dem Bestimmungsort wird das Zwischenelement (9.1, 9.2) einerseits mit dem Bodenelement (8) und andererseits mit dem Deckelelement (5) miteinander verbunden, wobei in Arbeitslage eine dichtende Verbindung zwischen dem Deckelelement (5), dem Bodenelement (8) und dem Zwischenelement (9.1, 9.2) entsteht;
- mindestens ein Ablauf (7) und mindestens ein Zulauf (6) werden mit einem Rohrnetz einer Solaranlage verbunden.

10. Verfahren nach Anspruch 9, **dadurch gekennzeichnet, dass** ein weiteres Zwischenelement (9.1, 9.2) zwischen Bodenelement (8) und Deckelelement (5) angeordnet wird.
